# EUROPEAN PATENT APPLICATION

(11) **EP 2 103 983 A1**
(43) Date of publication of application: **23.09.2009**
(21) Application number: 07831141.2
(22) Date of filing: 02.11.2007
(51) Int. Cl.: G02B 26/10

(54) **ACTUATOR FOR OPTICAL SCANNING**

(30) Priority: 22.12.2006 JP 2006345891
(71) Applicant: NHK Spring Co.,Ltd., Yokohama-shi Kanagawa 236-0004 (JP)
(72) Inventor: HIRATA, Takafumi, Yokohama-shi Kanagawa 236-0004 (JP); SHIGEMATSU, Ryohei, Yokohama-shi Kanagawa 236-0004 (JP); IINO, Shinji, Yokohama-shi Kanagawa 236-0004 (JP)
(74) Representative: HOFFMANN EITLE
(86) International application number: PCT/JP2007/071407
(87) International publication number: WO 2008/078456

(57) **Abstract**

An optical scanning actuator (10) includes a fixed member (11) having a light source (13), a movable member (14) having an optical element (15) that deflects light emitted from the light source and caused to vibrate by a driving unit (12) in a direction perpendicular to an optical axis of the optical element, and a joint unit (16) that connects the fixed member and the movable member, supports the movable member, and is bent in a direction perpendicular to an optical axis of light emitted from the light source by vibration of the movable member. The optical scanning actuator (10) scans light emitted from the light source in an vibration direction by vibration of the optical element along with the vibration of the movable member. The joint unit (16) includes pairs of joint members (17, 18) connected via at least one deformation reducing member (19) that reduces bending deformation of the joint members caused by the vibration of the movable member.

## Description

### TECHNICAL FIELD

The present invention relates to an optical scanning actuator.

### BACKGROUND ART

Scanning laser radars, laser scanners, laser printers, laser markers, and object monitors have been known as those using a scanner for scanning with a laser beam, etc. Among these apparatuses, the scanning laser radar for prevention of vehicle collision employs a scanner having a leaf-spring type optical scanning actuator. The scanner is configured such that a leaf spring member is fixed at its base end, an optical element such as a lens is attached to a movable member on an end of the leaf spring member, an electromagnetic driving unit causes the movable member to vibrate, and light emitted from a light source fixed at a fixation position is deflected by the optical element for scanning (for example, see Patent Document 1).

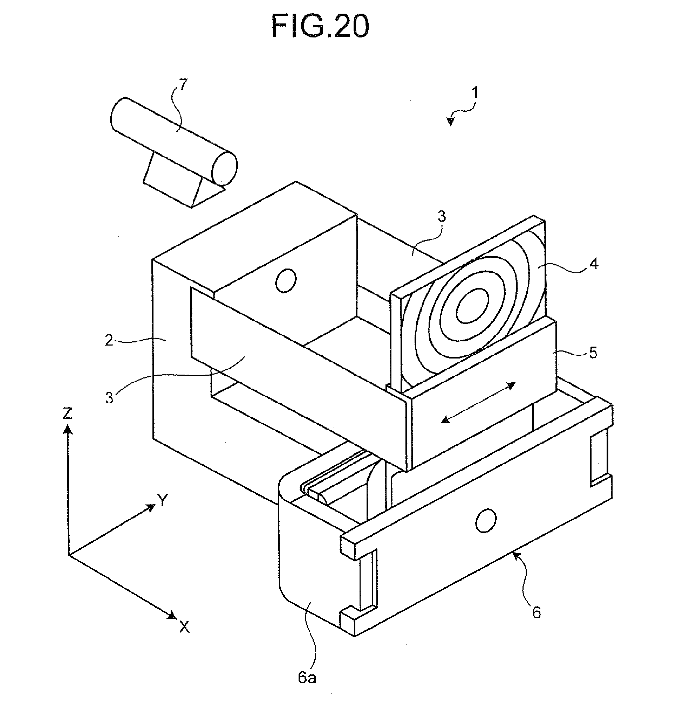

As one example of the leaf-spring type optical scanning actuator described above, an optical scanning actuator 1 illustrated in Fig. 20 is explained below. The optical scanning actuator 1 is structured such that one ends of a pair of leaf springs 3 having the same load-deflection characteristics are fitted to a main body 2 that functions as a fixed member, a movable member 5 on which a scanning lens 4 is placed in an upright position is mounted on the other ends of the leaf springs 3, and a driving unit 6 arranged on the front side of the main body 2 causes the movable member 5 to vibrate in a direction perpendicular to the surfaces of the leaf springs 3. A light Fresnel lens is used as the scanning lens 4 so as not to obstruct the vibration of the movable member 5. The driving unit 6 includes a coil, a magnet, and a yoke 6a that form a magnetic circuit. In the driving unit 6, the coil is arranged on the movable member 5 and the magnet is arranged on the main body 2. A scanning light source 7 is fixed to either the main body 2 or a component outside the optical scanning actuator 1. A light emitted from the scanning light source 7 is deflected by the scanning lens 4 and travels forward. In the optical scanning actuator 1 illustrated in Fig. 20, an arrow X indicates an anteroposterior direction, an arrow Y indicates a horizontal direction, and an arrow Z indicates a vertical direction, and the same is applied to the following embodiments.

The optical scanning actuator 1 energizes the coil to cause the movable member 5 to vibrate along a longitudinal direction of the yoke 6a, which is indicated by an arrow, by the Lorentz force generated between the magnet arranged on the main body 2 and the coil, so that the leaf springs 3 are bent in a direction perpendicular to the surfaces of the leaf springs 3. At the same time, a light emitted from the scanning light source 7 is deflected by the scanning lens 4 and travels forward. At this time, a deflection angle of the light is changed according to the vibration of the movable member 5 so that scanning can be performed with the light.

Patent Document 1: Japanese Patent Application Laid-open No. 2003-177348

### DISCLOSURE OF INVENTION

### PROBLEM TO BE SOLVED BY THE INVENTION

However, in the optical scanning actuator 1 described above, the movable member is swingably supported by a single pair of the leaf springs. This determines a movable range of the movable member according to the vibration. Therefore, the conventional optical scanning actuator cannot adjust the movable range of the movable member. More particularly, the movable range of the movable member in a longitudinal direction, which depends on the leaf springs, cannot be adjusted. As a result, adjustment flexibility is limited.

The present invention has been made to solve the above problems in the conventional technology and it is an object of the present invention to provide an optical scanning actuator capable of adjusting a movable range of a movable member in a flexible manner.

### MEANS FOR SOLVING PROBLEM

To overcome the problems and achieve the object mentioned above, according to the present invention, an optical scanning actuator includes: a fixed member on which a light source is mounted; a movable member that is caused to vibrate by a driving unit in a direction perpendicular to an optical axis of the optical element, an optical element that deflects light emitted from the light source being mounted on the movable member; and a joint unit that connects between the fixed member and the movable member, supports the movable member, and is bent in a direction perpendicular to an optical axis of the light emitted from the light source according to vibration of the movable member. The light emitted from a light source is scanned in an vibration direction of the movable member by vibration of the optical element along with the vibration of the movable member. The joint unit includes a plurality of pairs of joint members, and the pairs of the joint members are connected to one another via at least one deformation reducing member that reduces bending deformation of the joint members caused by the vibration of the movable member.

Further, in the optical scanning actuator according to the present invention, the deformation reducing member connects adjacent pairs of the joint members to each other.

Furthermore, in the optical scanning actuator according to the present invention, the deformation reducing member connects one joint member selected from one pair of the joint members to one joint member selected from another pair of the joint members.

Still further, in the optical scanning actuator according to the present invention, the joint members are arranged in a direction perpendicular to the light emitted from the light source, and are leaf springs having uniform load-deflection characteristics.

Still further, in the optical scanning actuator according to the present invention, the joint members are arranged in a direction perpendicular to the light emitted from the light source, and are leaf springs having different load-deflection characteristics.

Still further, in the optical scanning actuator according to the present invention, the joint members are arranged in parallel to the light emitted from the light source, and are leaf springs having uniform load-deflection characteristics.

Still further, in the optical scanning actuator according to the present invention, the joint members are arranged in parallel to the light emitted from the light source, and are leaf springs having different load-deflection characteristics.

### EFFECT OF THE INVENTION

An optical scanning actuator according to the present invention includes a joint unit having a plurality of pairs of joint members that connect a movable member and a fixed member to each other. The pairs of the joint members are connected to one another via a deformation reducing member that reduces deformation of the movable member[r]the joint members. Therefore, the deformation of the movable member[r]the joint members can be reduced by the deformation reducing member. As a result, a movable range of the movable member can be flexibly adjusted.

### BRIEF DESCRIPTION OF DRAWINGS

[Fig. 1] Fig. 1 is a perspective view of an optical scanning actuator according to a first embodiment of the present invention.
[Fig. 2] Fig. 2 is a perspective view of the optical scanning actuator without a driving unit.
[Fig. 3] Fig. 3 is a schematic diagram illustrating a positional relation among a fixed member, a movable member, a deformation reducing member, fixed-side leaf springs, and movable-side leaf springs when the movable member shifts to the right.
[Fig. 4] Fig. 4 is a perspective view for explaining scanning, with a light emitted from a scanning light source of the optical scanning actuator, in a straight line along a horizontal direction according to vibration of the movable member in the horizontal direction.
[Fig. 5] Fig. 5 is a schematic diagram illustrating a positional relation among a fixed member, a movable member, a deformation reducing member, fixed-side leaf springs, and movable-side leaf springs when the movable-side leaf springs have load-deflection characteristics larger than those of the fixed-side leaf springs and the movable member shifts to the right.
[Fig. 6] Fig. 6 is a schematic diagram illustrating a positional relation among a fixed member, a movable member, a deformation reducing member, fixed-side leaf springs, and movable-side leaf springs when the movable-side leaf springs have load-deflection characteristics smaller than those of the fixed-side leaf springs and the movable member shifts to the right.
[Fig. 7] Fig. 7 is a perspective view of a comparative example of the optical scanning actuator according to the first embodiment.
[Fig. 8] Fig. 8 is a schematic diagram illustrating a positional relation among a fixed member, a movable member, and leaf springs when the movable member shifts to the right.
[Fig. 9] Fig. 9 is a perspective view of a first modified example of the joint unit used in the optical scanning actuator according to the first embodiment.
[Fig. 10] Fig. 10 is a perspective view of a second modified example of the joint unit used in the optical scanning actuator according to the first embodiment.
[Fig. 11] Fig. 11 is a perspective view of an optical scanning actuator according to a second embodiment of the present invention.
[Fig. 12] Fig. 12 is a schematic diagram illustrating a positional relation among a fixed member, a movable member, a deformation reducing member, fixed-side leaf springs, and movable-side leaf springs when the movable member shifts to the right.
[Fig. 13] Fig. 13 is a schematic diagram illustrating a positional relation corresponding to Fig. 12 when load-deflection characteristics of a pair of adjacent leaf springs are different from each other and the movable member shifts to the right.
[Fig. 14] Fig. 14 is a perspective view of an optical scanning actuator according to a third embodiment of the present invention.
[Fig. 15] Fig. 15 is a schematic diagram of the arrangement of a plurality of pairs of leaf springs in the optical scanning actuator according to a first modification of the present invention.
[Fig. 16] Fig. 16 is a schematic diagram of the arrangement of a plurality of pairs of leaf springs in the optical scanning actuator according to a second modification of the present invention.
[Fig. 17] Fig. 17 is a schematic diagram of the arrangement of a plurality of pairs of leaf springs in the optical scanning actuator according to a third modification of the present invention.
[Fig. 18] Fig. 18 is a schematic diagram of the arrangement of a plurality of pairs of leaf springs in the optical scanning actuator according to a fourth modification of the present invention.
[Fig. 19] Fig. 19 is a schematic diagram of the arrangement of a leaf spring and a deformation reducing member in the optical scanning actuator according to a fifth modification of the present invention.
[Fig. 20] Fig. 20 is a perspective view of a conventional optical scanning actuator.

### EXPLANATIONS OF LETTERS OR NUMERALS

- 1: optical scanning actuator
- 11, 31: main body
- 12, 32: driving unit
- 13, 33: scanning light source
- 14, 34: movable member
- 15, 35: scanning lens
- 16, 36: joint unit
- 17, 37: fixed-side leaf spring
- 18, 38: movable-side leaf spring
- 19, 39: deformation reducing member
- 20: joint unit

### BEST MODE(S) FOR CARRYING OUT THE INVENTION

### (First Embodiment)

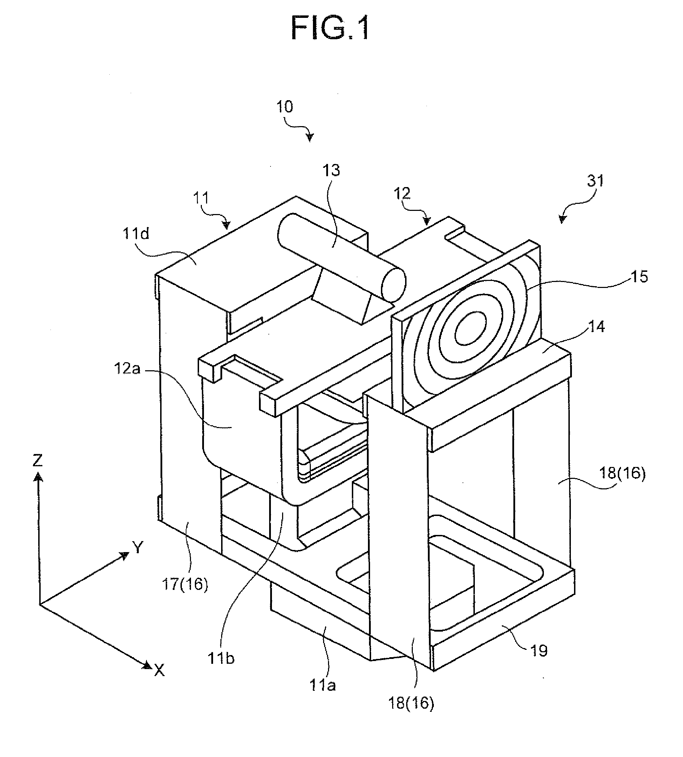

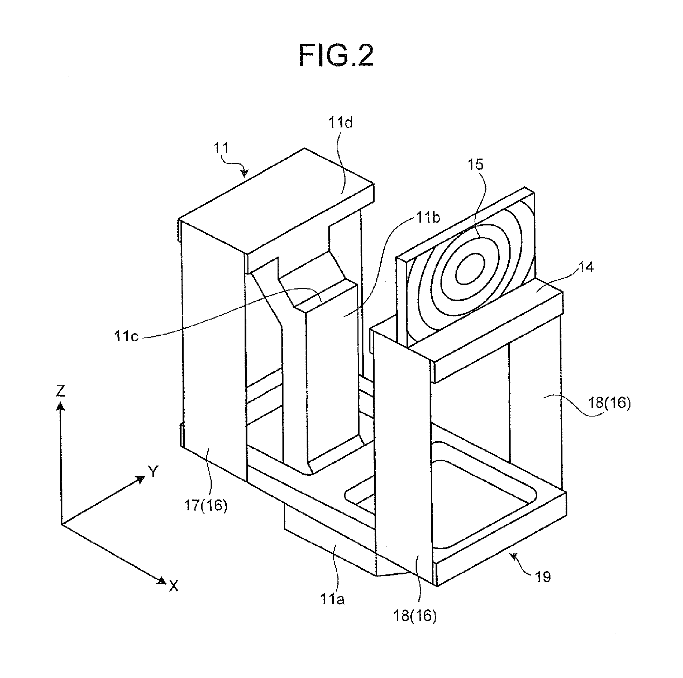

An optical scanning actuator according to a first embodiment of the present invention is described in detail below with reference to the accompanying drawings. Fig. 1 is a perspective view of the optical scanning actuator according to the first embodiment. Fig. 2 is a perspective view of the optical scanning actuator without a driving unit.

An optical scanning actuator 10 includes, as illustrated in Fig. 1, a main body 11, a movable member 14, a joint unit 16, and a deformation reducing member 19.

The main body 11 is, as illustrated in Figs. 1 and 2, a fixed member structured such that a support strut 11b is placed in an upright position on a base portion 11a, a table 11d is arranged on a top portion of the support strut 11b via a stepped-shaped mount portion 11c, and a driving unit 12 is mounted on the mount portion 11c. A scanning light source 13 is mounted on the top surface of the driving unit 12. The driving unit 12 includes, similar to the driving unit 6 of the optical scanning actuator 1 of the conventional technology, a coil, a magnet, and a yoke 12a that form a magnetic circuit. The coil is arranged on the movable member 14 and the magnet is arranged on the main body 11, so that the driving unit 12 can cause the movable member 14 to vibrate in a horizontal direction corresponding to a direction indicated by an arrow Y by the Lorentz force.

A scanning lens 15 is, as illustrated in Figs. 1 and 2, placed in an upright position on the top surface of the movable member 14 along a longitudinal direction of the movable member 14 and opposite the scanning light source 13. Similar to the scanning lens 4, a light Fresnel lens is used as the scanning lens 15.

The joint unit 16 is, as illustrated in Figs. 1 and 2, arranged in a vertical direction perpendicular to a light emitted from the scanning light source 13. The joint unit 16 includes a pair of fixed-side leaf springs 17 and a pair of movable-side leaf springs 18. A pair of the fixed-side leaf springs 17 and a pair of the movable-side leaf springs 18 are structured to have the same load-deflection characteristics. Top ends of the fixed-side leaf springs 17 are fitted to side surfaces of the table 11d of the main body 11 and bottom ends of the fixed-side leaf springs 17 are fitted to side surfaces of the deformation reducing member 19. Besides, top ends of the movable-side leaf springs 18 are fitted to side surface of the movable member 14 and bottom ends of the movable-side leaf springs 18 are fitted to the side surfaces of the deformation reducing member 19. Therefore, a pair of the fixed-side leaf springs 17 and a pair of the movable-side leaf springs 18 are bent (deformed) in a direction perpendicular to an optical axis of a light emitted from the scanning light source 13 according to vibration of the movable member 14.

The deformation reducing member 19 is, as illustrated in Figs. 1 and 2, a frame-shaped member that connects the bottom ends of the fixed-side leaf springs 17 and the bottom ends of the movable-side leaf springs 18 that are arranged parallel to each other, so that deformation of the movable member 14 can be reduced. In other words, the deformation reducing member 19 is supported by the fixed-side leaf springs 17 and the movable-side leaf springs 18 and reduces bending deformation of adjacent pairs of the fixed-side leaf springs 17 and the movable-side leaf springs 18 caused by the vibration of the movable member 14.

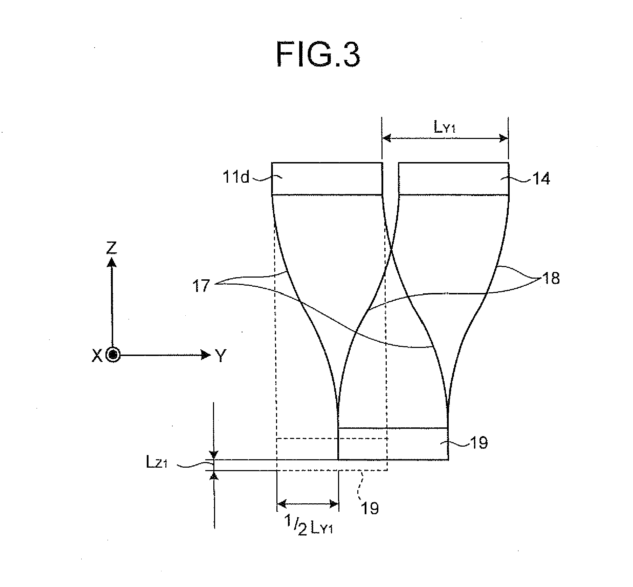

In the optical scanning actuator 10 structured as above, when the driving unit 12 causes the movable member 14 to vibrate, because a pair of the fixed-side leaf springs 17 and a pair of the movable-side leaf springs 18 are structured to have the same load-deflection characteristics, the movable member 14 horizontally vibrates in the horizontal direction indicated by the arrow Y. Fig. 3 schematically illustrates a positional relation, viewed from the side of the movable member 14, among the table 11d of the main body 11, the movable member 14, the deformation reducing member 19, a pair of the fixed-side leaf springs 17, and a pair of the movable-side leaf springs 18 when the movable member 14 shifts to the right along the direction indicated by the arrow Y. In Fig. 3, positions of the deformation reducing member 19, the fixed-side leaf springs 17, and the movable-side leaf springs 18 in rest states before the movable member 14 starts to vibrate are indicated by dotted lines.

As illustrated in Fig. 3, when the movable member 14 shifts to the right, a pair of the fixed-side leaf springs 17 and a pair of the movable-side leaf springs 18 are bent (deformed) in opposite directions along a direction indicated by the arrow Y that is perpendicular to an optical axis of a light emitted from the scanning light source 13. That is, a pair of the fixed-side leaf springs 17 is bent in a direction from top left toward bottom right and a pair of the movable-side leaf springs 18 is bent in a direction from top right toward bottom left. Thus, the deflection directions are opposite to each other. At this time, because the fixed-side leaf springs 17 and the movable-side leaf springs 18 are structured to have the same load-deflection characteristics, the fixed-side leaf springs 17 and the movable-side leaf springs 18 are deformed by the same deflection amounts in opposite directions.

With this structure, the deformation reducing member 19 shifts, with respect to a shift distance LY1 of the movable member 14 in the direction of the arrow Y, by a distance of 1/2 of the shift distance LY1 in the direction of the arrow Y. Accordingly, the fixed-side leaf springs 17 and the movable-side leaf springs 18 are bent (deformed) only by the amount corresponding to 1/2 of the shift distance LY1 of the movable member 14 in opposite directions. Therefore, compared to bending deformation of a pair of leaf springs caused by the shift of the movable member 14 by the same distance when the main body 11 and the movable member 14 are connected to each other only by a single pair of the leaf springs, the deformation reducing member 19 can reduce the bending deformation of the fixed-side leaf springs 17 and the movable-side leaf springs 18. Furthermore, because the deformation reducing member 19 is connected to the table 11d as the fixed member via the fixed-side leaf springs 17, the deformation reducing member 19 is lifted up in a direction indicated by an arrow Z according to the bending deformation of the fixed-side leaf springs 17 and the movable-side leaf springs 18. A distance LZ1 by which the deformation reducing member 19 is lifted up at this time can be 1/2 of a distance by which the deformation reducing member 19 is lifted up when the table 11d and the movable member 14 are connected to each other only by a single pair of the leaf springs. Therefore, the movable member 14 can vibrate in a straight line along the horizontal direction indicated by the arrow Y without shifting downward. The same relation can be applied to a case in which the movable member 14 shifts to the left along the direction indicated by the arrow Y.

In this manner, the deformation reducing member 19 reduces the bending deformation of a pair of the fixed-side leaf springs 17 and a pair of the movable-side leaf springs 18, which are adjacent pairs of joint members, caused by the vibration of the movable member 14. Therefore, the movable member 14 can vibrate in a straight line along the horizontal direction indicated by the arrow Y.

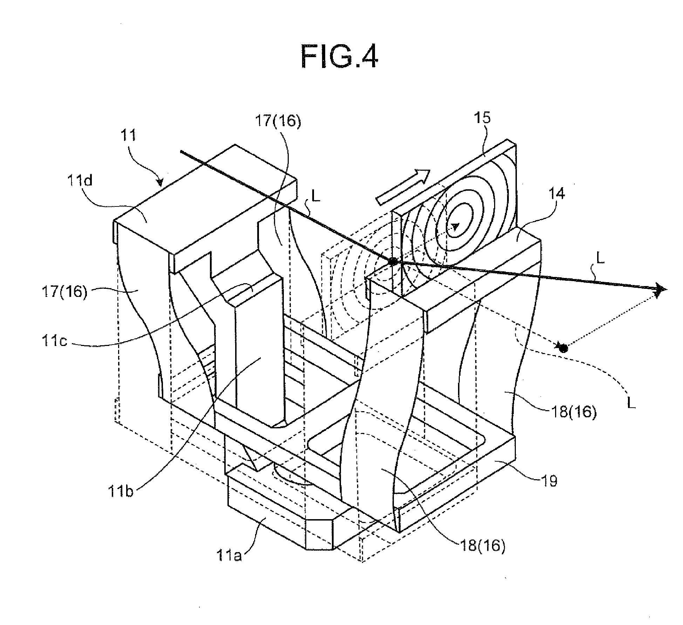

As a result, in the optical scanning actuator 10, as illustrated in Fig. 4, when the movable member 14 shifts to the right indicated by a horizontal arrow, a light L emitted from the scanning light source 13 is deflected in the horizontal direction by the scanning lens 15 and then travels forward. Therefore, the optical scanning actuator 1 enables scanning, with the light L emitted from the scanning light source 13, in a straight line along the horizontal direction according to the vibration of the movable member 14. The dotted lines in Fig. 4 indicate positions of the movable member 14, the scanning lens 15, the joint unit 16, and the deformation reducing member 19 in rest states before the movable member 14 starts to vibrate.

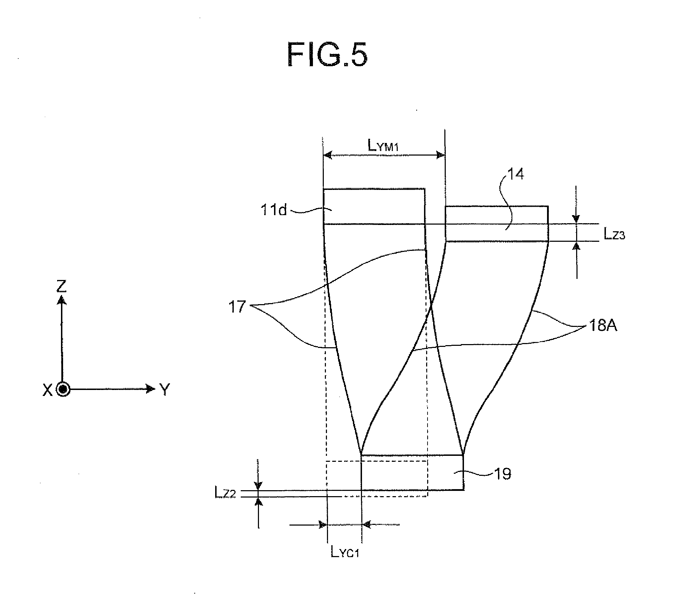

If the optical scanning actuator 10 employs movable-side leaf springs 18A having spring constants smaller than those of the fixed-side leaf springs 17, the movable-side leaf springs 18A are more easily bent than the fixed-side leaf springs 17. Therefore, as illustrated in Fig. 5, when the movable member 14 shifts by a shift distance LYM1 in the horizontal direction indicated by the arrow Y, a shift distance LYC1 of the deformation reducing member 19 becomes shorter than 1/2 of the shift distance LYM1 of the movable member 14. Furthermore, while the deformation reducing member 19 is lifted up by a distance LZ2 in the direction of the arrow Z, the distance LZ2 becomes shorter than the distance LZ1 by which the deformation reducing member 19 is lifted up when the load-deflection characteristics of the fixed-side leaf springs 17 and the movable-side leaf springs 18 are set to be equal to each other (LZ1>LZ2).

Moreover, longitudinal lengths of the movable-side leaf springs 18A in the direction of the arrow Z become shorter than longitudinal lengths, in the direction of the arrow Z, of the fixed-side leaf springs 17 that are less bent (less deformed) than the movable-side leaf springs 18A. Therefore, the movable member 14 vibrates while shifting downward by a distance LZ3 along the direction indicated by the arrow Z. The same relation can be applied to a case in which the movable member 14 shifts to the left along the direction indicated by the arrow Y.

As a result, in the optical scanning actuator 10, the deformation reducing member 19 can reduce the bending deformation of the fixed-side leaf springs 17 and the movable-side leaf springs 18A, which are adjacent pairs of the joint members, caused by the vibration of the movable member 14, and, the movable member 14 can shift both in the horizontal direction indicated by the arrow Y and in a downward direction along the direction indicated by the arrow Z. Thus, the optical scanning actuator 10 can cause the movable member 14 to vibrate both in the horizontal direction and in the vertical direction depending on optical characteristics of the scanning lens 15 by setting different load-deflection characteristics between the fixed-side leaf springs 17 and the movable-side leaf springs 18A.

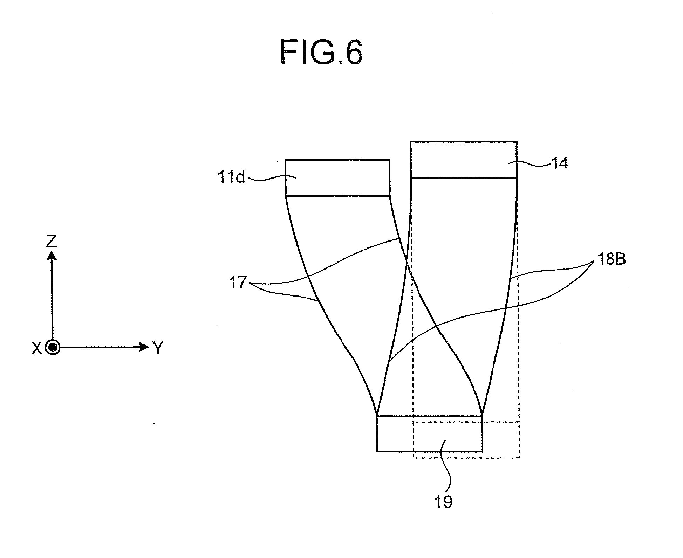

On the other hand, the optical scanning actuator 10 can employ movable-side leaf springs 18B having spring constants larger than those of the fixed-side leaf springs 17. In this case, because the movable-side leaf springs 18B are less easily bent than the fixed-side leaf springs 17, the movable member 14 shifts upward in the direction of the arrow Z according to the vibration thereof as illustrated in Fig. 6.

### (Comparative Example)

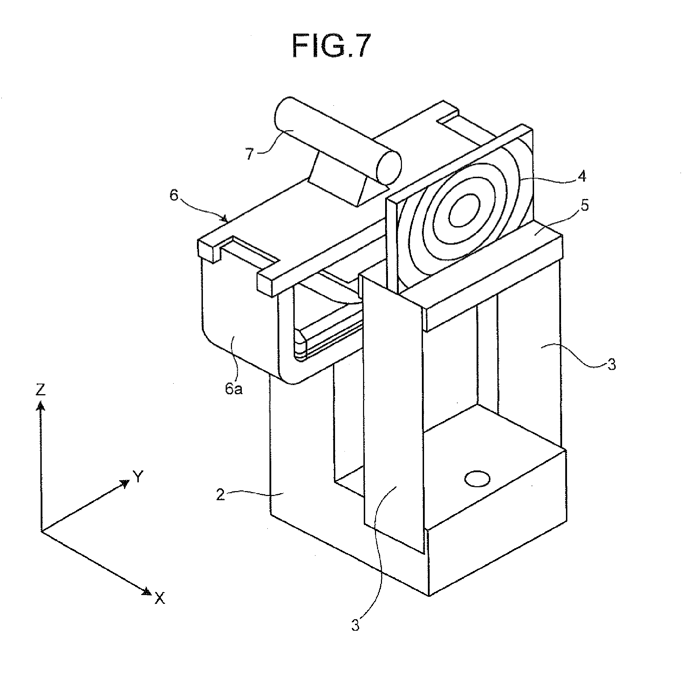

For comparison, explanation is given about bending deformation of the leaf springs 3 of an optical scanning actuator in which, as illustrated in Fig. 7, the main body 2 and the movable member 5 are connected to each other via a single pair of the leaf springs 3 arranged in a vertical direction perpendicular to a light emitted from the scanning light source 7. In the optical scanning actuator illustrated in Fig. 7, the driving unit 6 is mounted on a top portion of the main body 2, the scanning light source 7 is mounted on the driving unit 6, and the scanning lens 4 is placed in an upright position on the movable member 5.

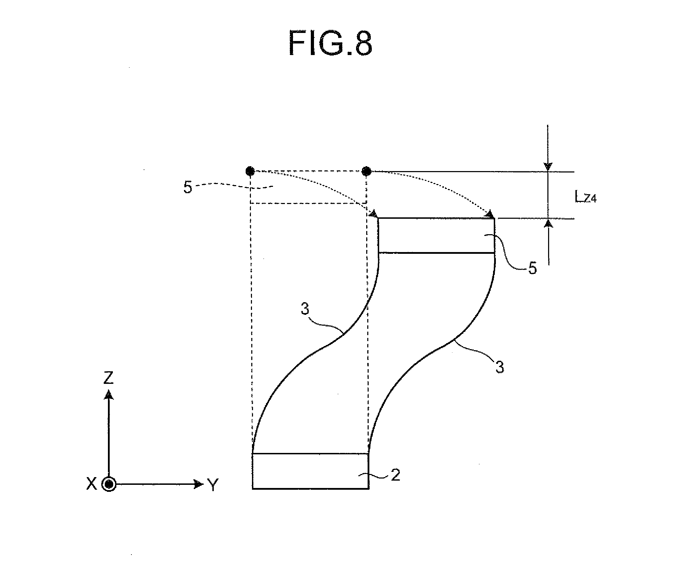

In the optical scanning actuator illustrated in Fig. 7, the driving unit 6 causes the movable member 5 to vibrate. Accordingly, a pair of the leaf springs 3 is bent and thus the movable member 5 shifts both in the horizontal direction indicated by the arrow Y and in the vertical direction indicated by the arrow Z. Fig. 8 illustrates a positional relation, viewed from the side of the movable member 5, among the main body 2, the movable member 5, and a pair of the leaf springs 3 when the movable member 5 shifts to the right in the direction indicated by the arrow Y. In Fig. 8, positions of the movable member 5 and the leaf springs 3 in rest states before the movable member 5 starts to vibrate are indicated by dotted lines.

In the optical scanning actuator illustrated in Fig. 7, as illustrated in Fig. 8, a pair of the leaf springs 3 is bent due to the vibration of the movable member 5, which causes the movable member 5 to shift downward by a distance LZ4 along the direction indicated by the arrow Z. As a result, in the optical scanning actuator illustrated in Fig. 7, when the movable member 5 vibrates, the scanning lens 4 also shifts to the right while shifting downward according to the vibration of the movable member 5. Therefore, in the optical scanning actuator illustrated in Fig. 7, scanning is performed with a light emitted from the scanning light source 7 in an arc downward to the right as illustrated in Fig. 8. Thus, the optical scanning actuator illustrated in Fig. 7 cannot perform scanning in a straight line along the horizontal direction. Furthermore, in the optical scanning actuator illustrated in Fig. 7, the movable member 5 can only shift downward according to the leaf springs along with the vibration of the movable member 5. Therefore, a movable range of the movable member 5 may not be adjusted.

In this manner, in the optical scanning actuator 10 according to the first embodiment, the deformation reducing member 19 can reduce the bending deformation of a pair of the fixed-side leaf springs 17 and a pair of the movable-side leaf springs 18 caused by the vibration of the movable member 14, and the amount of the bending deformation can be changed as appropriate by setting the load-deflection characteristics of the fixed-side leaf springs 17 and the movable-side leaf springs 18 to be equal to each other or to be different from each other. Therefore, in the optical scanning actuator 10, the movable member 14 can vibrate in a straight line along the horizontal direction, or can vibrate both in the horizontal direction and in the vertical direction by setting different load-deflection characteristics between the fixed-side leaf springs 17 and the movable-side leaf springs 18A or between the fixed-side leaf springs 17 and the movable-side leaf springs 18B. As a result, a movable range of the movable member 14 can be adjusted in a longitudinal direction of a pair of the leaf springs used with the movable member 14. Thus, flexibility of adjustment of the movable range of the movable member 14 can be more assured compared to the conventional optical scanning actuator in which the main body and the movable member are connected to each other only by a single pair of the leaf springs.

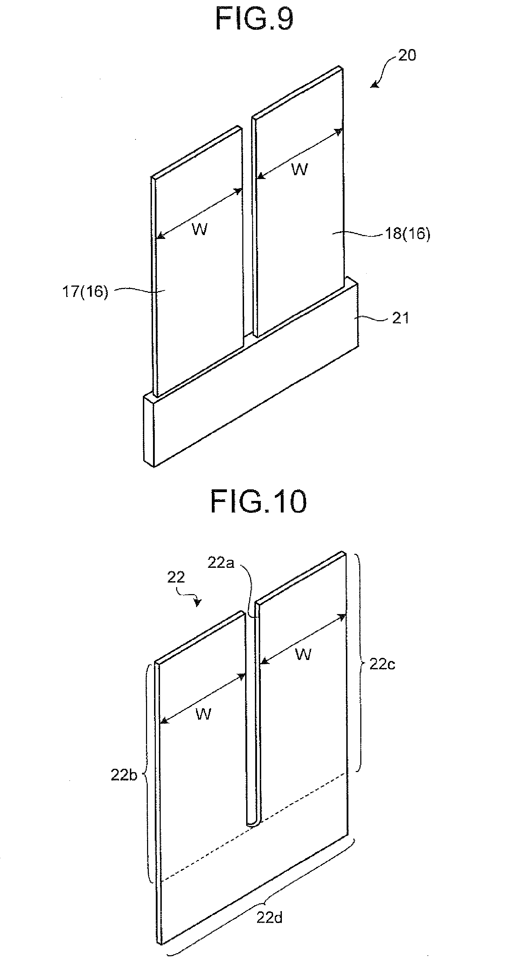

The optical scanning actuator 10 can employ a joint unit 20 illustrated in Fig. 9 to shorten an interval in the direction indicated by the arrow X between the fixed-side leaf spring 17 and the movable-side leaf spring 18 as the joint members. The joint unit 20 is structured such that the fixed-side leaf spring 17 and the movable-side leaf spring 18 are connected to each other via a deformation reducing member 21. Furthermore, the optical scanning actuator 10 can employ a leaf spring 22 illustrated in Fig. 10. The leaf spring 22 is structured such that a slit 22a is formed on the substantially center portion in the width direction of a substrate from a top end of the substrate toward near a bottom end of the substrate so that one area across the slit 22a functions as a fixed-side leaf spring 22b and the other area functions as a movable-side leaf spring 22c. A portion that couples the fixed-side leaf spring 22b and the movable-side leaf spring 22c below the slit 22a functions as a deformation reducing member 22d corresponding to the deformation reducing member 19.

With use of the leaf spring 22 structured as described above, the configuration of the optical scanning actuator 10 can be more simple, resulting in downsizing the optical scanning actuator 10. If the leaf spring 22 is made of plate material having uniform load-deflection characteristics, the fixed-side leaf spring 22b and the movable-side leaf spring 22c can be structured to have the same load-deflection characteristics. On the other hand, if the leaf spring 22 is made of plate materials having different load-deflection characteristics, the fixed-side leaf spring 22b and the movable-side leaf spring 22c can be structured to have different load-deflection characteristics. It is also possible to adjust the load-deflection characteristics by setting different plate widths W, which is indicated by an arrow, between the fixed-side leaf spring 17 and the movable-side leaf spring 18 of the joint unit 20 or between the fixed-side leaf spring 22b and the movable-side leaf spring 22c of the leaf spring 22.

### (Second Embodiment)

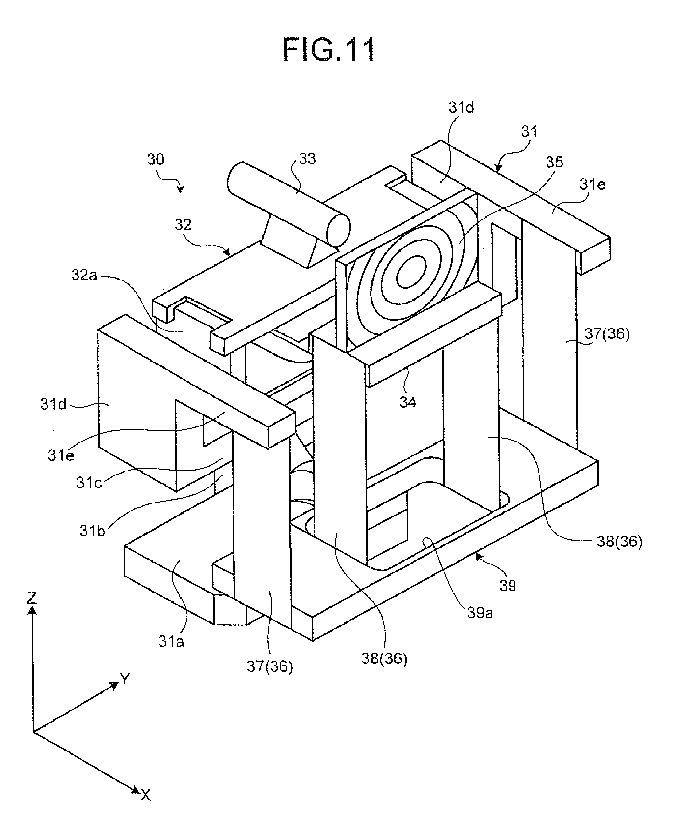

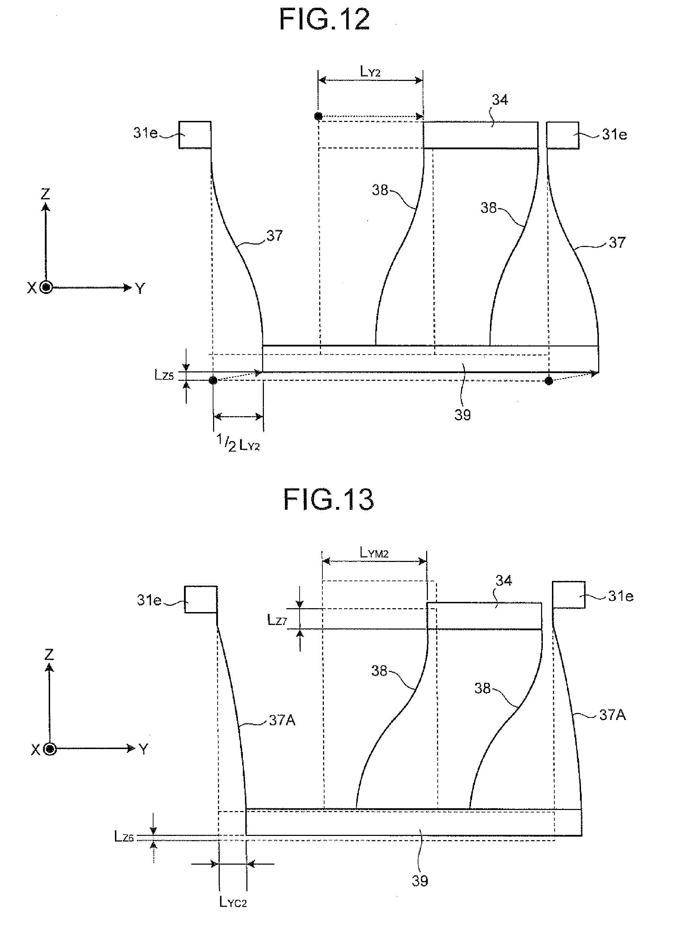

An optical scanning actuator according to a second embodiment of the present invention is described in detail below with reference to the accompanying drawings. In the optical scanning actuator according to the first embodiment, a pair of the fixed-side leaf springs and a pair of the movable-side leaf springs are arranged in an anterioposterior direction. However, in the optical scanning actuator according to the second embodiment, a pair of the fixed-side leaf springs and a pair of the movable-side leaf springs are arranged in a horizontal direction. Fig. 11 is a perspective view of the optical scanning actuator according to the second embodiment. Fig. 12 is a schematic diagram illustrating a positional relation among a fixed member, a movable member, a deformation reducing member, fixed-side leaf springs, and movable-side leaf springs when the movable member shifts to the right.

An optical scanning actuator 30 includes, as illustrated in Fig. 11, a main body 31, a movable member 34, a joint unit 36, and a deformation reducing member 39.

The main body 31 is, as illustrated in Fig. 11, a fixed member structured such that a support strut 31b is placed in an upright position on a base portion 31a, and a mount portion 31c is arranged on a top portion of the support strut 31b in the horizontal direction. In the main body 31, arms 31e extended in the direction of the arrow X are arranged on both side walls 31d of the mount portion 31c, respectively, and a driving unit 32 is mounted on the mount portion 31c. The driving unit 32 has the same structure as the driving unit 12. That is, a scanning light source 33 is mounted on the top surface of the driving unit 32, and the driving unit 32 includes a coil, a magnet, and a yoke 32a that form a magnetic circuit. The coil is arranged on the movable member 34 and the magnet is arranged on the main body 31, so that the driving unit 32 can cause the movable member 34 to vibrate in a horizontal direction corresponding to the direction indicated by the arrow Y.

A scanning lens 35 is, as illustrated in Fig. 11, placed in an upright position on the top surface of the movable member 34 along a longitudinal direction of the movable member 34 and opposite the scanning light source 33. Similar to the scanning lens 15, a light Fresnel lens is used as the scanning lens 35.

The joint unit 36 is, as illustrated in Fig. 11, arranged in a vertical direction perpendicular to a light emitted from the scanning light source 33. The joint unit 36 includes a pair of fixed-side leaf springs 37 and a pair of movable-side leaf springs 38. A pair of the fixed-side leaf springs 37 and a pair of the movable-side leaf springs 38 are structured to have the same load-deflection characteristics. Top ends of the fixed-side leaf springs 37 are fitted to side surfaces of the arms 31e of the main body 31 and bottom ends of the fixed-side leaf springs 17 are fitted to side surfaces of the deformation reducing member 39. Besides, top ends of the movable-side leaf springs 38 are fitted to side surface of the movable member 34 and bottom ends of the movable-side leaf springs 38 are fitted to inner side surfaces of an opening 39a formed on the deformation reducing member 39. Therefore, a pair of the fixed-side leaf springs 37 and a pair of the movable-side leaf springs 38 are bent (deformed) in a direction perpendicular to an optical axis of a light emitted from the scanning light source 33 according to the vibration of the movable member 34.

The deformation reducing member 39 is, as illustrated in Fig. 11, a frame-shaped member that connects the bottom ends of the fixed-side leaf springs 37 and the bottom ends of the movable-side leaf springs 38 that are arranged parallel to each other, and includes the opening 39a at the center thereof. In other words, the deformation reducing member 39 is supported by the fixed-side leaf springs 37 and the movable-side leaf springs 38 and reduces bending deformation of adjacent pairs of the fixed-side leaf springs 37 and the movable-side leaf springs 38 caused by the vibration of the movable member 34.

The optical scanning actuator 30 is structured as described above. When the driving unit 32 causes the movable member 34 to vibrate, because a pair of the fixed-side leaf springs 37 and a pair of the movable-side leaf springs 38 are structured to have the same load-deflection characteristics, the movable member 34 horizontally vibrates in the horizontal direction indicated by the arrow Y. Fig. 12 schematically illustrates a positional relation, viewed from the side of the movable member 34, among the arms 31e of the main body 31, the movable member 14, the deformation reducing member 39, a pair of the fixed-side leaf springs 37, and a pair of the movable-side leaf springs 38 when the movable member 34 shifts to the right along the direction indicated by the arrow Y. In Fig. 12, positions of the deformation reducing member 39, the fixed-side leaf springs 37, and the movable-side leaf springs 38 in rest states before the movable member 34 starts to vibrate are indicated by dotted lines.

As illustrated in Fig. 12, when the movable member 34 shifts to the right, a pair of the fixed-side leaf springs 37 and a pair of the movable-side leaf springs 38 are bent (deformed) in opposite directions along a direction indicated by the arrow Y that is perpendicular to an optical axis of a light emitted from the scanning light source 33. That is, a pair of the fixed-side leaf springs 37 is bent in a direction from top left toward bottom right and a pair of the movable-side leaf springs 38 is bent in a direction from top right toward bottom left. Thus, the deflection directions are opposite to each other. At this time, because the fixed-side leaf springs 37 and the movable-side leaf springs 38 are structured to have the same load-deflection characteristics, the fixed-side leaf springs 37 and the movable-side leaf springs 38 are deformed by the same deflection amounts in opposite directions.

With this structure, the deformation reducing member 39 shifts, with respect to a shift distance LY2 of the movable member 34 in the direction of the arrow Y, by a distance of 1/2 of the shift distance LY2 in the direction of the arrow Y. Accordingly, the fixed-side leaf springs 37 and the movable-side leaf springs 38 are bent (deformed) only by the amount corresponding to 1/2 of the shift distance LY2 of the movable member 34 in opposite directions. Therefore, compared to bending deformation of a pair of leaf springs caused by the shift of the movable member 34 by the same distance when the movable member 34 is arranged at a bottom area without using the deformation reducing member 39 and the arms 31e on the both sides are connected to the movable member 34 only by a single pair of the leaf springs, the deformation reducing member 39 can reduce the bending deformation of the fixed-side leaf springs 37 and the movable-side leaf springs 38. Furthermore, because the deformation reducing member 39 is connected to the arms 31e as the fixed member via the fixed-side leaf springs 37, the deformation reducing member 39 is lifted up in a direction indicated by the arrow Z according to the bending deformation of the fixed-side leaf springs 37 and the movable-side leaf springs 38. A distance LZ5 by which the deformation reducing member 39 is lifted up at this time can be 1/2 a distance by which the deformation reducing member 39 is lifted up when the arms 31e and the movable member 34 are connected to each other only by a single pair of the leaf springs. Therefore, the movable member 34 can vibrate in a straight line along the horizontal direction indicated by the arrow Y without shifting downward. The same relation can be applied to a case in which the movable member 34 shifts to the left along the direction indicated by the arrow Y.

In this manner, the deformation reducing member 39 reduces the bending deformation of a pair of the fixed-side leaf springs 37 and a pair of the movable-side leaf springs 38, which are adjacent pairs of the joint members, caused by the vibration of the movable member 34. Therefore, the movable member 34 can vibrate in a straight line along the horizontal direction indicated by the arrow Y.

As a result, the optical scanning actuator 30 enables scanning, with a light emitted from the scanning light source 33, in a straight line according to the vibration of the movable member 34.

If the optical scanning actuator 30 employs fixed-side leaf springs 37A having spring constants larger than those of the movable-side leaf springs 38, the fixed-side leaf springs 37A are less easily bent than the movable-side leaf springs 38. Therefore, as illustrated in Fig. 13, when the movable member 34 shifts by a shift distance LYM2 in the horizontal direction indicated by the arrow Y, a shift distance LYC2 of the deformation reducing member 39 becomes shorter than 1/2 of the shift distance LYM2 of the movable member 34. Furthermore, while the deformation reducing member 39 is lifted up by a distance LZ6 in the direction of the arrow Z, the distance LZ6 becomes shorter than the distance LZ5 by which the deformation reducing member 39 is lifted up when the load-deflection characteristics of the fixed-side leaf springs 37 and the movable-side leaf springs 38 are set to be equal to each other (LZ5>LZ6).

Moreover, longitudinal lengths, in the direction of the arrow Z, of the movable-side leaf springs 38 that are more bent (more deformed) than the fixed-side leaf springs 37A become shorter than longitudinal lengths, in the direction of the arrow Z, of the fixed-side leaf springs 37A that are less bent (less deformed) than the movable-side leaf springs 38. Therefore, the movable member 34 vibrates while shifting downward by a distance LZ7 along the direction indicated by the arrow Z. The same relation can be applied to a case in which the movable member 34 shifts to the left along the direction indicated by the arrow Y.

As a result, in the optical scanning actuator 30, the deformation reducing member 39 can reduce the bending deformation of the fixed-side leaf springs 37A and the movable-side leaf springs 38, which are adjacent pairs of the joint members, caused by the vibration of the movable member 34, and, the movable member 34 can shift both in the horizontal direction indicated by the arrow Y and in a downward direction along the direction indicated by the arrow Z. Thus, the optical scanning actuator 30 can cause the movable member 34 to vibrate both in the horizontal direction and in the vertical direction depending on optical characteristics of the scanning lens 35.

Furthermore, in the optical scanning actuator 30, the fixed-side leaf springs 37 and the movable-side leaf springs 38 are adjacently arranged in the horizontal direction, so that an optical axial direction dimension in the optical axis direction of a light emitted from the scanning light source 33 can be reduced compared to the optical scanning actuator 10 according to the first embodiment.

The optical scanning actuator 30 can be configured such that spring constants of the fixed-side leaf springs 37 are set larger than those of the movable-side leaf springs 38 depending on the optical characteristics of the scanning lens 35. In this case, the movable member 34 shifts upward in the direction of the arrow Z according to the vibration thereof.

### (Third Embodiment)

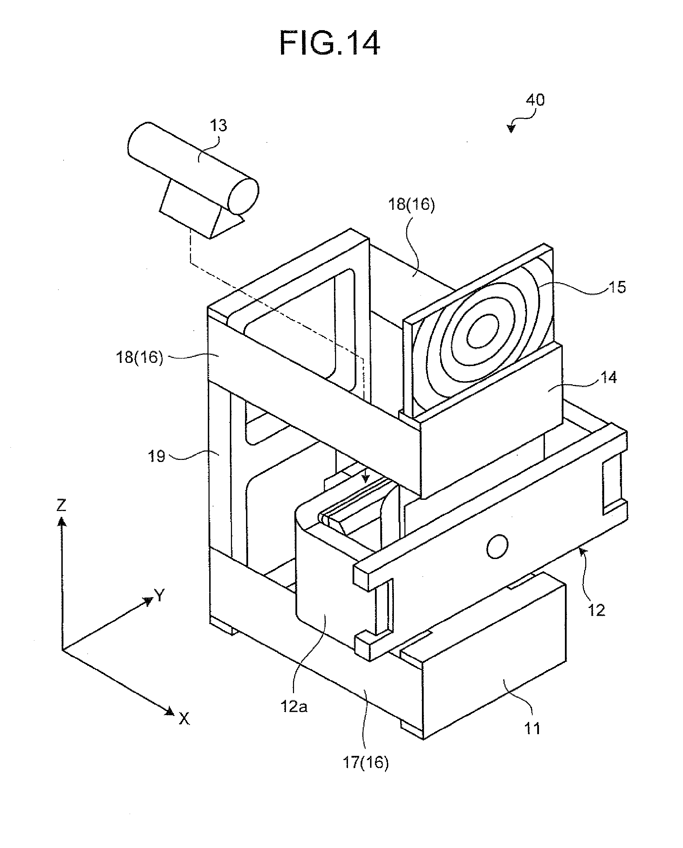

An optical scanning actuator according to a third embodiment of the present invention is described in detail below with reference to the accompanying drawings. In the optical scanning actuator according to the first embodiment, the fixed-side leaf springs and the movable-side leaf springs are arranged in a vertical direction perpendicular to the optical axis of a light emitted form the scanning light source. However, in the optical scanning actuator according to the third embodiment, the fixed-side leaf springs and the movable-side leaf springs are arranged in a direction parallel to the optical axis of a light emitted form the scanning light source. Fig. 14 is a perspective view of the optical scanning actuator according to the third embodiment. In the optical scanning actuator according to the third embodiment, components same as those of the optical scanning actuator according to the first embodiment are assigned with the same reference symbols.

An optical scanning actuator 40 is structured such that the driving unit 12 is mounted on the main body 11, and the joint unit 16 that connects the main body 11 and the movable member 14 includes a pair of the fixed-side leaf springs 17 and a pair of the movable-side leaf springs 18 that are connected to each other via the deformation reducing member 19. The scanning light source 13 is mounted on the main body 11 in a manner indicated by a chain line in Fig. 14 via an adjustment member that adjusts a position in a height direction.

In the optical scanning actuator 40 having the above structure, if the load-deflection characteristics of a pair of the fixed-side leaf springs 17 and a pair of the movable-side leaf springs 18 are set to be equal to each other, when the driving unit 12 causes the movable member 14 to vibrate in the direction of the arrow Y, the deformation reducing member 19 can reduce the bending deformation of the fixed-side leaf springs 17 and the movable-side leaf springs 18. As a result, the movable member 14 can vibrate in a straight line along the horizontal direction indicated by the arrow Y. On the other hand, in the optical scanning actuator 40, if the load-deflection characteristics of a pair of the fixed-side leaf springs 17 and a pair of the movable-side leaf springs 18 are set to be different from each other, the movable member 14 can vibrate in the horizontal direction while shifting in an optical axis direction. Therefore, the movable range of the movable member 14 in the longitudinal direction of the fixed-side leaf springs 17 and the movable-side leaf springs 18 can be adjusted. Thus, the flexibility of adjustment of the movable range of the movable member 14 can be assured.

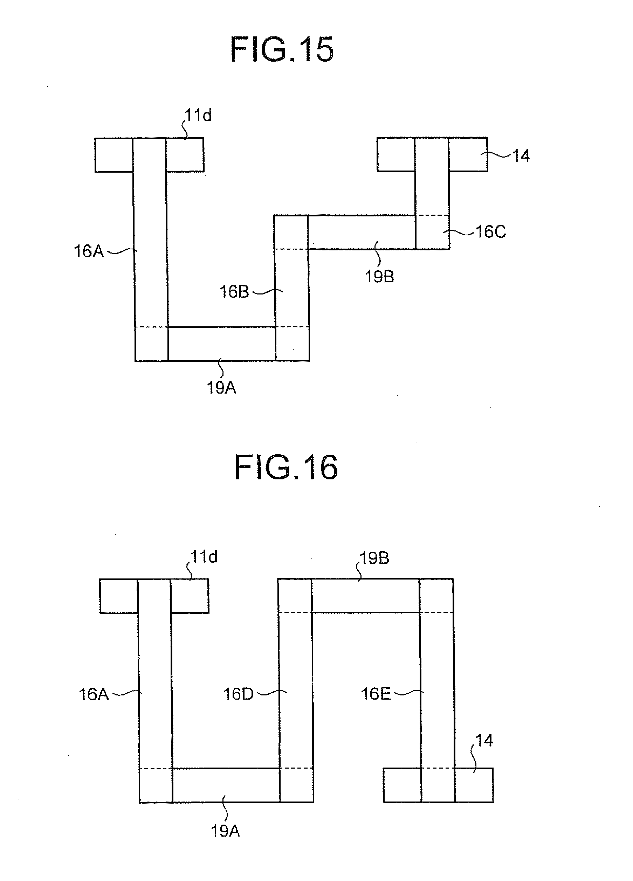

It is explained that, in the embodiments, the optical scanning actuator includes two pairs of the leaf springs as the joint members. However, the optical scanning actuator according to the present invention can include three or more pairs of the joint members. For example, if the optical scanning actuator according to the first embodiment includes three pairs of the joint members arranged in the vertical direction, the configuration thereof can be those described below with reference to a schematic diagram illustrating the table 11d of the main body 11, the movable member 14, the joint members, and the deformation reducing member 19. That is, as illustrated in Fig. 15, it is possible to connect one ends of a pair of leaf springs 16A to the table 11d, the other ends of a pair of the leaf springs 16A to one ends of a pair of leaf springs 16B via a deformation reducing member 19A, the other ends of a pair of the leaf springs 16B to one ends of a pair of leaf springs 16C via a deformation reducing member 19B, and the other ends of a pair of the leaf springs 16C to the movable member 14. Furthermore, as illustrated in Fig. 16, it is possible to connect one ends of a pair of the leaf springs 16A to the table 11d, the other ends of a pair of the leaf springs 16A to one ends of a pair of leaf springs 16D via the deformation reducing member 19A, the other ends of a pair of the leaf springs 16D to one ends of a pair of leaf springs 16E via the deformation reducing member 19B, and the other ends of a pair of the leaf springs 16E to the movable member 14.

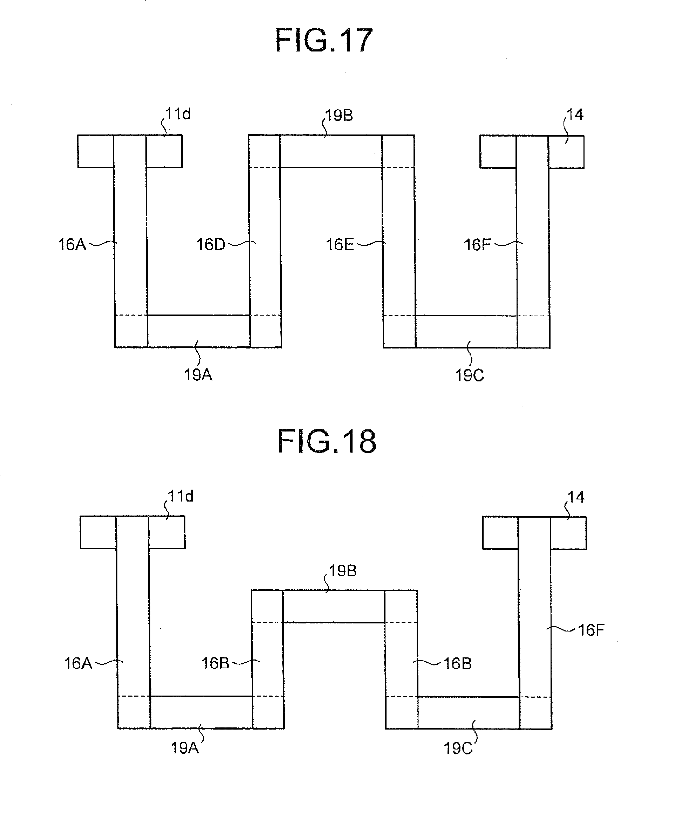

On the other hand, if the optical scanning actuator includes four pairs of the joint members arranged in the vertical direction, it is possible to connect, as illustrated in Fig. 17, one ends of a pair of the leaf springs 16A to the table 11d, the other ends of a pair of the leaf springs 16A to one ends of a pair of the leaf springs 16D via the deformation reducing member 19A, the other ends of a pair of the leaf springs 16D to one ends of a pair of the leaf springs 16E via the deformation reducing member 19B, the other ends of a pair of the leaf springs 16E to one ends of a pair of leaf springs 16F via a deformation reducing member 19C, and the other ends of a pair of the leaf springs to the movable member 14. In this case, as illustrated in Fig. 18, it is possible to use a pair of the leaf springs 16B instead of a pair of the leaf springs 16D and a pair of the leaf springs 16E.

The adjacent pairs among the pairs of the leaf springs 16A to 16F can be structured such that the load-deflection characteristics thereof are set to be equal to each other or set to be different from each other depending on the optical characteristics of the scanning lens used in the optical scanning actuator.

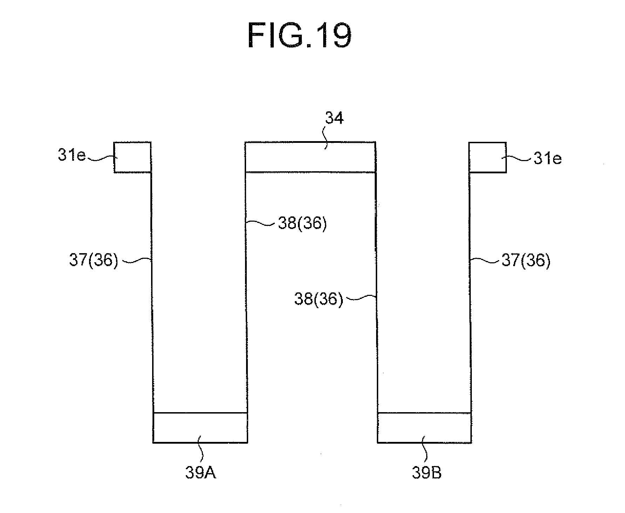

It is possible to provide a plurality of the deformation reducing members, for example, to provide two deformation reducing members. In this case, the deformation reducing members can be structured such that one of the deformation reducing members connects two joint members respectively selected from two different pairs of the joint members, and the other one of the deformation reducing members connects the rest two joint members. This configuration is explained with reference to Fig. 19 schematically illustrating positions of the fixed member, the movable member, the deformation reducing members, the fixed-side leaf springs, and the movable-side leaf springs, which are assigned with the same symbols as the components of the optical scanning actuator 30 according to the second embodiment. That is, as illustrated in Fig. 19, a deformation reducing member 39A connects the arm 31e positioned on the left to the movable member 34 via one of the fixed-side leaf springs 37 selected from a pair of the fixed-side leaf springs 37 and one of the movable-side leaf springs 38 selected from a pair of the movable-side leaf springs 38 that is different from a pair of the fixed-side leaf springs 37. Similarly, a deformation reducing member 39B connects the arm 31e positioned on the right to the movable member 34 via the other one of the fixed-side leaf springs 37 selected from a pair of the fixed-side leaf springs 37 and the other one of the movable-side leaf springs 38 selected from a pair of the movable-side leaf springs 38 that is different from a pair of the fixed-side leaf springs 37.

With this configuration, the deformation reducing members 39A and 39B can reduce deformation of each of the fixed-side leaf springs 37 and the movable-side leaf springs 38.

The optical scanning actuator in the above embodiments employs the leaf springs as the joint members. However, as long as scanning can be performed with a light by causing the movable member to vibrate, components other than the lead springs, such as a wire and a coil, can be used to support the movable member and cause the movable member to vibrate.

### INDUSTRIAL APPLICABILITY

In this manner, the optical scanning actuator according to the present invention may be effectively applied to an optical scanning actuator that uses a laser beam or the like and is installed in a scanning laser radar, a laser scanner, a laser printer, a laser marker, an object monitor, and the like.

Furthermore, the optical scanning actuator according to the present invention may also be applied to, for example, an optical scanning actuator installed in an in-vehicle laser radar scanner mainly used for detecting obstacles such as vehicles ahead or pedestrian, a laser radar scanner as part of an infrastructure mainly used for detecting obstacles such as vehicles or pedestrian, a crime-prevention or care-providing laser radar scanner mainly used for detecting indoor conditions such as any change in the conditions and human activities, and a laser radar scanner used for light illumination by an illumination apparatus or image projection by a video projector.

## Claims

1. An optical scanning actuator comprising:
a fixed member on which a light source is mounted;
a movable member that is caused to vibrate by a driving unit in a direction perpendicular to an optical axis of the optical element, an optical element that deflects light emitted from the light source being mounted on the movable member; and
a joint unit that connects between the fixed member and the movable member, supports the movable member, and is bent in a direction perpendicular to an optical axis of the light emitted from the light source according to vibration of the movable member, wherein
the light emitted from a light source is scanned in an vibration direction of the movable member by vibration of the optical element along with the vibration of the movable member,
the joint unit includes a plurality of pairs of joint members, and
the pairs of the joint members are connected to one another via at least one deformation reducing member that reduces bending deformation of the joint members caused by the vibration of the movable member.

2. The optical scanning actuator according to claim 1, wherein the deformation reducing member connects adjacent pairs of the joint members to each other.

3. The optical scanning actuator according to claim 1, wherein the deformation reducing member connects one joint member selected from one pair of the joint members to one joint member selected from another pair of the joint members.

4. The optical scanning actuator according to claim 1, wherein the joint members are arranged in a direction perpendicular to the light emitted from the light source, and are leaf springs having uniform load-deflection characteristics.

5. The optical scanning actuator according to claim 2, wherein the joint members are arranged in a direction perpendicular to the light emitted from the light source, and are leaf springs having uniform load-deflection characteristics.

6. The optical scanning actuator according to claim 3, wherein the joint members are arranged in a direction perpendicular to the light emitted from the light source, and are leaf springs having uniform load-deflection characteristics.

7. The optical scanning actuator according to claim 1, wherein the joint members are arranged in a direction perpendicular to the light emitted from the light source, and are leaf springs having different load-deflection characteristics.

8. The optical scanning actuator according to claim 2, wherein the joint members are arranged in a direction perpendicular to the light emitted from the light source, and are leaf springs having different load-deflection characteristics.

9. The optical scanning actuator according to claim 3, wherein the joint members are arranged in a direction perpendicular to the light emitted from the light source, and are leaf springs having different load-deflection characteristics.

10. The optical scanning actuator according to claim 1, wherein the joint members are arranged in parallel to the light emitted from the light source, and are leaf springs having uniform load-deflection characteristics.

11. The optical scanning actuator according to claim 2, wherein the joint members are arranged in parallel to the light emitted from the light source, and are leaf springs having uniform load-deflection characteristics.

12. The optical scanning actuator according to claim 3, wherein the joint members are arranged in parallel to the light emitted from the light source, and are leaf springs having uniform load-deflection characteristics.

13. The optical scanning actuator according to claim 1, wherein the joint members are arranged in parallel to the light emitted from the light source, and are leaf springs having different load-deflection characteristics.

14. The optical scanning actuator according to claim 2, wherein the joint members are arranged in parallel to the light emitted from the light source, and are leaf springs having different load-deflection characteristics.

15. The optical scanning actuator according to claim 3, wherein the joint members are arranged in parallel to the light emitted from the light source, and are leaf springs having different load-deflection characteristics.
